Europäisches Patentamt

European Patent Office

Office européen des brevets

(11) Publication number: **0 424 869 A1**

## EUROPEAN PATENT APPLICATION

(21) Application number: **90120283.8**

(51) Int. Cl.⁵: **G05B 19/04**

(22) Date of filing: **23.10.90**

(30) Priority: **23.10.89 JP 275643/89**

(43) Date of publication of application:
**02.05.91 Bulletin 91/18**

(84) Designated Contracting States:
**DE GB**

(71) Applicant: **Komatsu Ltd.**
**Komatsu Bldg. 2-3-6 Akasaka,**
**Minato-ku Tokyo 107(JP)**

Applicant: **YAMATAKE-HONEYWELL CO. LTD.**
**12-19 Shibuya 2 Chome Shibuya-Ku**

**Tokyo 150(JP)**

(72) Inventor: **Miyata, Hiroshi**
**132, Aojimachi**
**Komatsu-city, Ishikawa(JP)**
Inventor: **Ashikawa, Takeshi**
**2-14-15, Nishiyawata**
**Hiratsuka-city, Kanagawa(JP)**

(74) Representative: **Kahler, Kurt**
**Patentanwalt Dipl.-Ing. Kurt Kahler**
**Gerberstrasse 3 Postfach 1249**
**W-8948 Mindelheim(DE)**

(54) **Fault diagnosing apparatus.**

(57) A fault diagnosing apparatus includes a fault tree, a storage section, a read control section, a display section, an update section, and a calculation/update section. The fault tree is designed such that a plurality of choices are set with respect to one question associated with the cause of a fault of a fault diagnosis target, answers and choices branch off from each of the choices, and choices in the final step respective reach causes of the fault. The storage section stores the probabilities of states of the respective choices on the basis of the selection result of each of the choices constituting the fault tree. The read control section reads out, in accordance with an input operation for selecting a choice, a question with respect to the selected choice, choices with respect thereto, and probabilities thereof. The display section displays the question, the choices, and the probabilities read out by the read control section. The update section updates the selected probability of the choice selected by the input operation. The calculation/update section calculates the probability of the state of the choice on the basis of the updated probability and updates the probability set before the calculation by using the calculation result.

FIG.1

## FAULT DIAGNOSING APPARATUS

Background of the Invention

The present invention relates to a fault diagnosing apparatus for detecting the cause of a fault when a control target in, e.g., a sequence control system failed.

In a sequence control system, a control target, such as a plant, a processing apparatus, or an equipment systems, is properly operated by controlling a large number of sensors and actuators, e.g., limit switches and solenoid valves, at predetermined timings based on a sequence program using a sequence controller in accordance with signals from various sensors arranged at the respective portions of the control target. In addition, such a system has a function of diagnosing a fault in a control target during an operation. When a fault is detected, the fault is displayed by means of a lamp, a message, or the like.

In the conventional fault diagnosis, therefore, faults are very roughly diagnosed, and the number of items of faults which can be detected is very small. For example, in a press machine or the like, the number of items is about 10 to 250.

In addition to fault diagnosis of a control target, fault diagnosis of the above-mentioned sequence controller itself, including a large number of contacts and actuators, various sensors, and the like, is performed. However, the display contents of abnormal states are limited to only phenomena, and true causes thereof are not displayed at all.

Furthermore, the sequence program includes a control program and a program for fault diagnosis. The two programs are alternately executed. Therefore, the total capacity of programs is increased to increase a programming load. This may also interfere with the execution of the control program, and pose other problems, e.g., that fault diagnosis cannot be performed at high speed.

In the above-described fault diagnosis function, when a fault is detected, an operation of a control target is stopped as needed and only a message of an abnormal state is displayed. However, more detailed fault diagnosis, e.g., information of the cause of the fault or a repair method of the fault, cannot be presented to a user.

For this reason, when a fault is detected and displayed, an operator in charge of maintenance checks a portion at which the fault has occurred, and also checks an operation manual. The operator then determines the cause of the fault or the repair method and performs a proper operation.

For this purpose, therefore, the operator is required to have experience and skill. In addition, it is generally difficult to properly read a large volume of an operation manual. For this reason, a fault repair may require a long period of time.

Especially when a control target is a manufacturing machine such as a press machine, MTTR (mean time to repair = total time to repair faults/total number of faults to be repaired) is considered as an important factor. That is, it is important to repair a fault within a short period of time. For this purpose, it is very important to detect the cause of a fault within a short period of time.

Summary of the Invention

The present invention has been made in consideration of the above situation, and has as its object to provide a fault diagnosing apparatus capable of detecting the cause of a fault within a short period of time.

In order to achieve the above object, according to the present invention, there is provided a fault diagnosing apparatus comprising a fault tree in which a plurality of choices are set with respect to one question associated with a cause of a fault of a fault diagnosis target, answers and choices branch off from each of the choices, and final choices reach causes of the fault, storage means for storing probabilities of states of the respective choices on the basis of a selection result of each of the choices constituting the fault tree, read control means for reading out, in accordance with an input operation for selecting a choice, a question with respect to the selected choice, choices with respect thereto, and probabilities thereof, display means for displaying the question, the choices, and the probabilities read out by the read control means, update means for updating the selected probability of the choice selected by the input operation, and calculation/update means for calculating a probability of a state of the choice on the basis of the updated probability and updating the probability set before the calculation by using the calculation result.

Since a learning function acts in such a manner that if selection of an answer for each question in a fault tree is properly performed, and the correct cause of a fault is obtained, the probabilities that the states of the selected answers occur are increased, answers having higher probabilities are displayed on upper positions in the next selection. Therefore, selection of answers is facilitated, and the time to reach the correct cause of a fault can be shortened.

## Brief Description of the drawings

Fig. 1 is a block diagram showing a sequence control system using a fault diagnosing apparatus according to the present invention;

Fig. 2 is a view showing an arrangement of data, such as a fault tree, stored in a memory of the apparatus in Fig; 1;

Fig. 3 is a flow chart showing an operation of the apparatus in Fig. 1;

Figs. 4, 5, and 6 are views each showing a display screen of a display section used by the apparatus in Fig. 1; and

Fig. 7 is a flow chart showing diagnosis processing of the apparatus in Fig. 1.

## Description of the Preferred Embodiments

An embodiment of the present invention will be described below with reference to the accompanying drawings.

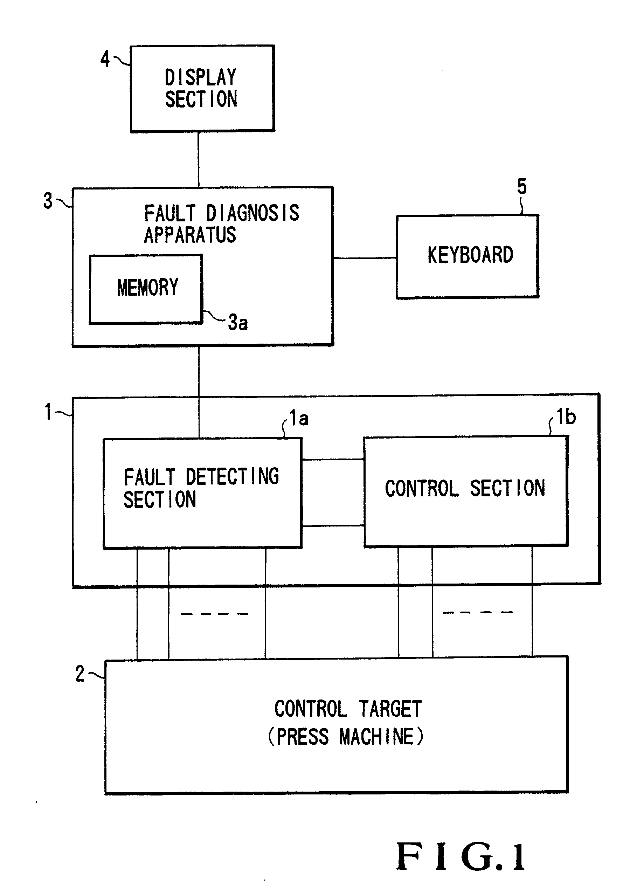

Referring to Fig. 1, reference numeral 1 denotes a sequence controller; 2, a large press machine as a control target to be controlled by the sequence controller 1; 1a, a fault detecting section, of the sequence controller 1, for detecting an abnormal state (fault) of the press machine 2; 1b, a control section, of the sequence controller 1, for controlling an operation of the press machine 2 and roughly detecting a fault; 3, a fault diagnosis apparatus, constituted by a memory 3a, a CPU, and the like, for checking the cause of a fault on the basis of a fault detection signal from the sequence controller 1; 4, a display section, constituted by a CRT or the like and connected to the fault diagnosing apparatus 3, for displaying questions, answers, probabilities, and the like in accordance with the interaction between an operator and the apparatus 3; and 5, a keyboard for inputting an answer selected by the operator with respect to the apparatus 3.

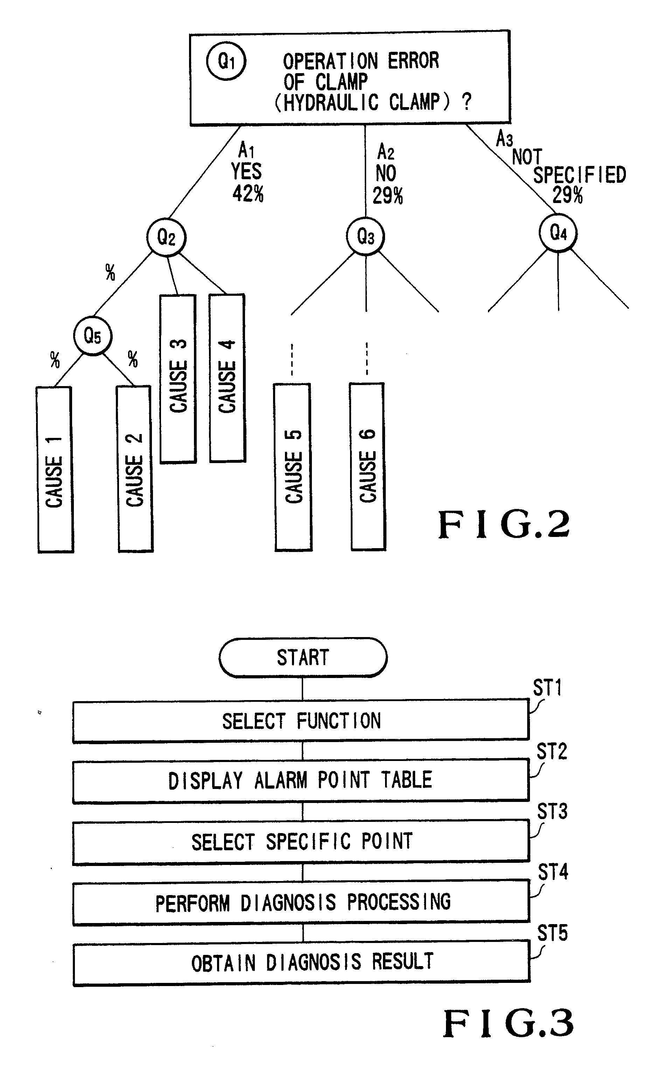

Fig. 2 shows various data including a fault tree and the like registered in the memory 3a.

In this fault tree, a first question $Q_1$ is set in relation to one fault. Three answers $A_1$, $A_2$, and $A_3$ are prepared as choices with respect to the question $Q_1$. Questions $Q_2$, $Q_3$, and $Q_4$ are respectively set after the choices. These questions then branch out into choices. Final choices reach a cause 1, a cause 2, cause 3,.... The memory 3a serves to store data representing the probabilities (%) that the states of the answers $A_1$, $A_2$, and $A_3$ as the choices constituting the fault tree occur, and data representing the probabilities that the respective answers are used (selected) in the past.

An operation will be described below with reference to a flow chart in Fig. 3.

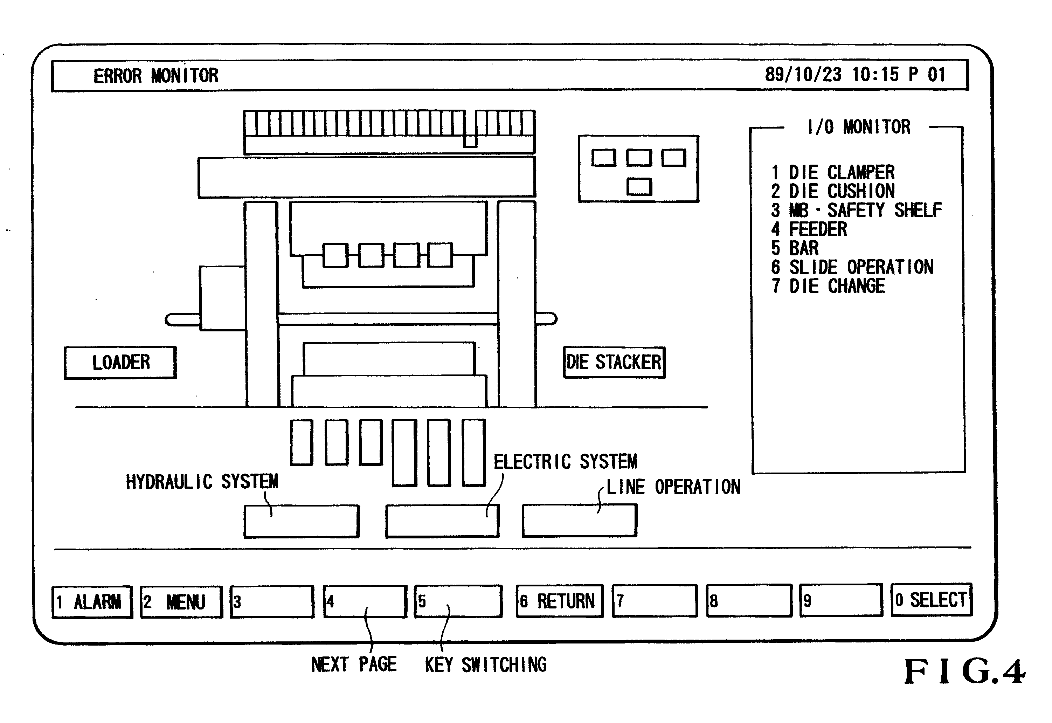

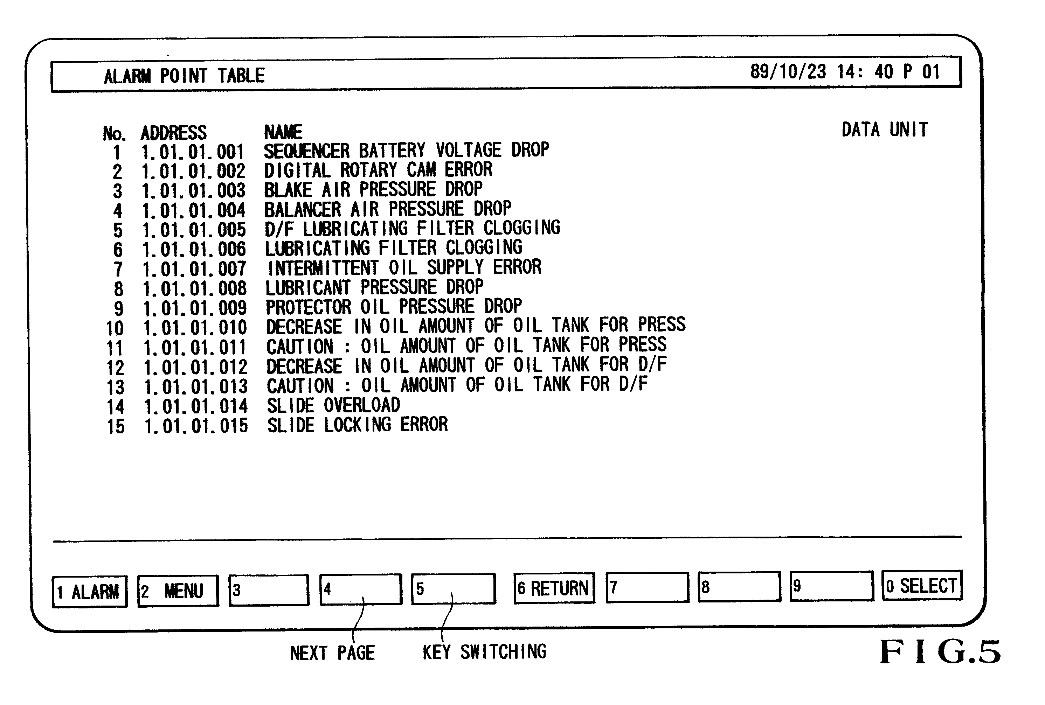

When a fault occurs in the press machine 2, the operator operates the keyboard 5 ink step ST1 to select an abnormal state monitor function of the fault diagnosing apparatus. With this operation, a schematic representation of the press machine 2 shown in Fig. 4 is displayed on the display section 4. In this case, the display section 4 displays that an abnormal state has occurred in a hydraulic system. When the keyboard 5 is operated again in step ST2, an alarm point table shown in Fig. 5 is displayed. When a specific point is designated from this table in step ST3, the flow advances to step ST4 to perform diagnosis processing in which selection of questions and answers is performed in an interactive mode in accordance with the above-mentioned fault tree. With this operation, a diagnosis result, i.e., the cause of the fault can be detected in step ST5.

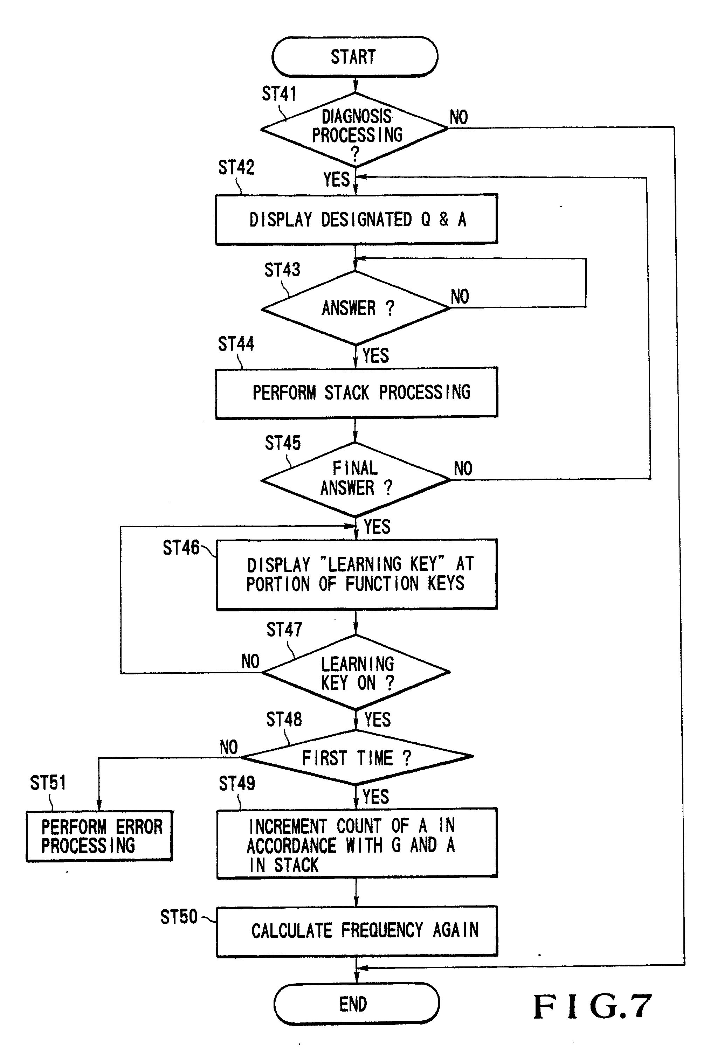

Fig. 7 is a flow chart showing the diagnosis processing in step ST4 in more detail.

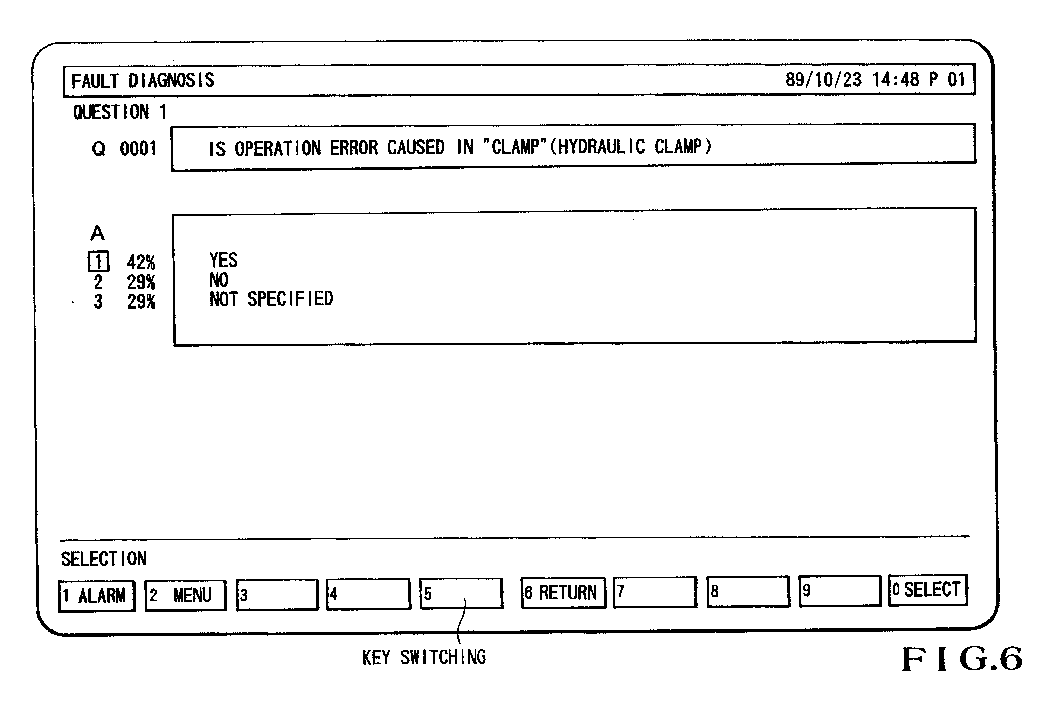

Referring to Fig. 7, it is determined in step ST41 whether diagnosis processing is performed with respect to a specific alarm point. If the keyboard 5 is operated to perform this processing, the display section 4 displays the first question $Q_1$ - (shown in Fig. 2) with respect to the designated point and the probabilities (frequencies) that the states of the answers (choices) $A_1$, $A_2$, and $A_3$ for the question $Q_1$ occur. These probabilities can be arbitrarily set and changed and can be displayed in an arbitrary order instead of displaying them in the order of decreasing values as in Fig. 6.

If the operator selects the answer $A_1$ in step ST43, stack processing is performed in step ST44 to store the selected question $Q_1$ and answer $A_1$. Thereafter, it is checked in step ST45 whether the answer $A_1$ is a final answer. If NO in step ST45, the flow returns to step ST42 to display the next question $Q_2$ and its answers and waits for selection of an answer in step ST43. This processing is repeated until the flow reaches to a final answer, and the selected questions and answers are stored.

The above-described operation is repeated in accordance with the fault tree until a final answer is obtained. If an answer for a question is erroneously selected, the flow can return to the step for the previous question.

If a final answer, i.e., the cause of the fault, is selected and displayed, a learning key is displayed on the display section 4 as one of function keys in step ST46. If this learning key is depressed once in step ST47, the counts of all the selected answers are updated in the memory 3a in step ST49 through step ST48. Note that if the learning key is consecutively depressed twice, the flow advances to step ST51 to perform error processing. Subsequently, in step ST50, the probabilities of the associated answers are calculated by using the counts updated in step ST49, and the memory 3a is updated on the basis of the calculation result. 1

As has been described above, according to the present invention, selection of questions and answers is performed in an interactive mode by using a fault tree. The probabilities that the states of the respective answers occur are calculated on the basis of the selected answers, and the calculation result is displayed. With this arrangement, a learning function is added to the fault diagnosis function. That is, the accuracy of probabilities respectively displayed with respect to a plurality of answers for one question is increased every time diagnosis is performed to facilitate selection by an operator. Therefore, the cause of a fault can be detected within a short period of time, and the above-mentioned MTTR can be increased.

## Claims

1. A fault diagnosing apparatus comprising:
- a fault tree means (3) in which a plurality of choices are set with respect to one question associated with a cause of a fault of a fault diagnosis target, answers and choices branch off from each of the choices, and final choices reach causes of the fault;
- storage means (3a) for storing probabilities of states of the respective choices on the basis of a selection result of each of the choices constituting said fault tree;
- read control means (1b) for reading out, in accordance with an input operation for selecting a choice, a question with respect to the selected choice, choices with respect thereto, and probabilities thereof;
- display means (4) for displaying the question, the choices, and the probabilities read out by said read control means;
- update means (3) for updating the selected probability of the choice selected by the input operation; and
- calculation/update means (3) for calculating a probability of a state of the choice on the basis of the updated probability and updating the probability set before the calculation by using the calculation result.

2. An apparatus to claim 1, further comprising error processing means for disabling said update means in response to an input operation and performing error processing.

3. An apparatus according to claim 1 or 2, further comprising means for canceling the selection of the choices until the final choices reach the causes of the fault.

4. An apparatus according to any of claims 1 to 3, wherein the probabilities read out from said read control means are arbitrarily set and updated and are displayed in an arbitrary order.

5. A fault diagnosing method comprising the steps:
- forming a fault tree in which a plurality of choices are set with respect to one question associated with a cause of a fault of a fault diagnosis target, answers and choices branch off from each of the choices, and final choices reach causes of the fault;
- storing probabilities of states of the respective choices on the basis of a selection result of each of the choices constituting said fault tree;
- reading out, in accordance with an input operation for selecting a choice, a question with respect to the selected choice, choices with respect thereto, and probabilities thereof;
- displaying the question, the choices, and the probabilities read out by said read control means;
- updating the selected probability of the choice selected by the input operation; and
- calculating a probability of a state of the choice on the basis of the updated probability and updating the probability set before the calculation by using the calculation result.

6. A method according to claim 5, further comprising the steps of error processing including disabling said update means in response to an input operation.

7. A method according to claim 5 or 6, further comprising the step of canceling the selection of the choices until the final choices reach the causes of the fault.

8. A method according to any of claims 5 to 7, wherein the probabilities read out are arbitrarily det and updated and are displayed in an arbitrary order.

FIG.1

EP 0 424 869 A1

FIG.2

Q1 — OPERATION ERROR OF CLAMP (HYDRAULIC CLAMP) ?

A1 YES 42%  →  Q2
A2 NO 29%  →  Q3
A3 NOT SPECIFIED 29%  →  Q4

Q2 — %  →  Q5, CAUSE 3, CAUSE 4
Q5 — %  →  CAUSE 1, %  →  CAUSE 2
Q3 — CAUSE 5, CAUSE 6

FIG.3

START

SELECT FUNCTION — ST1

DISPLAY ALARM POINT TABLE — ST2

SELECT SPECIFIC POINT — ST3

PERFORM DIAGNOSIS PROCESSING — ST4

OBTAIN DIAGNOSIS RESULT — ST5

6

I/O MONITOR

1 DIE CLAMPER
2 DIE CUSHION
3 MB · SAFETY SHELF
4 FEEDER
5 BAR
6 SLIDE OPERATION
7 DIE CHANGE

LOADER

DIE STACKER

ELECTRIC SYSTEM

HYDRAULIC SYSTEM

LINE OPERATION

| 1 ALARM | 2 MENU | 3 | 4 | 5 | 6 RETURN | 7 | 8 | 9 | 0 SELECT |

NEXT PAGE    KEY SWITCHING

EP 0 424 869 A1

FIG.4

```
┌─────────────────────────────────────────────────────────────┐
│ ALARM POINT TABLE                        89/10/23 14: 40 P 01 │
├─────────────────────────────────────────────────────────────┤
│                                                               │
│  No. ADDRESS        NAME                         DATA UNIT    │
│   1  1.01.01.001   SEQUENCER BATTERY VOLTAGE DROP             │
│   2  1.01.01.002   DIGITAL ROTARY CAM ERROR                  │
│   3  1.01.01.003   BLAKE AIR PRESSURE DROP                   │
│   4  1.01.01.004   BALANCER AIR PRESSURE DROP                │
│   5  1.01.01.005   D/F LUBRICATING FILTER CLOGGING           │
│   6  1.01.01.006   LUBRICATING FILTER CLOGGING               │
│   7  1.01.01.007   INTERMITTENT OIL SUPPLY ERROR             │
│   8  1.01.01.008   LUBRICANT PRESSURE DROP                   │
│   9  1.01.01.009   PROTECTOR OIL PRESSURE DROP               │
│  10  1.01.01.010   DECREASE IN OIL AMOUNT OF OIL TANK FOR PRESS │
│  11  1.01.01.011   CAUTION : OIL AMOUNT OF OIL TANK FOR PRESS │
│  12  1.01.01.012   DECREASE IN OIL AMOUNT OF OIL TANK FOR D/F │
│  13  1.01.01.013   CAUTION : OIL AMOUNT OF OIL TANK FOR D/F  │
│  14  1.01.01.014   SLIDE OVERLOAD                            │
│  15  1.01.01.015   SLIDE LOCKING ERROR                       │
│                                                               │
│  ───────────────────────────────────────────────────────────│
│  │1 ALARM│ │2 MENU│ │3   │ │4   │ │5   │ │6 RETURN│ │7   │ │8   │ │9   │ │0 SELECT│ │
│                         NEXT PAGE   KEY SWITCHING             │
└─────────────────────────────────────────────────────────────┘
```

FIG.5

EP 0 424 869 A1

| FAULT DIAGNOSIS | 89/10/23 14:48 P 01 |
| --- | --- |

QUESTION 1

| Q 0001 | IS OPERATION ERROR CAUSED IN "CLAMP"(HYDRAULIC CLAMP) |
| --- | --- |

A

| [1] | 42% | YES |
| 2 | 29% | NO |
| 3 | 29% | NOT SPECIFIED |

SELECTION

| 1 ALARM | 2 MENU | 3 | 4 | 5 | 6 RETURN | 7 | 8 | 9 | 0 SELECT |

KEY SWITCHING

F I G.6

```
              ┌──────────────┐
              │    START     │
              └──────┬───────┘
                     │
      ST41           ▼
           ◇ DIAGNOSIS ◇────── NO ──────────┐
           ◇ PROCESSING ◇                    │
           ◇     ?     ◇                      │
                │ YES                         │
      ST42      ▼                             │
      ┌─────────────────────────┐            │
      │ DISPLAY DESIGNATED Q & A │            │
      └──────────┬──────────────┘            │
                 ▼                            │
      ST43  ◇           ◇── NO ──┐           │
            ◇  ANSWER ? ◇         │           │
                │ YES             │           │
      ST44      ▼                 │           │
      ┌──────────────────────┐    │           │
      │ PERFORM STACK        │    │           │
      │ PROCESSING           │    │           │
      └──────────┬───────────┘    │           │
                 ▼                 │           │
      ST45  ◇   FINAL    ◇── NO ──┘           │
            ◇  ANSWER ?  ◇                     │
                │ YES                          │
      ST46      ▼                              │
      ┌──────────────────────────┐            │
      │ DISPLAY "LEARNING KEY" AT │            │
      │ PORTION OF FUNCTION KEYS  │            │
      └──────────┬───────────────┘            │
                 ▼                             │
      ST47  NO ─◇ LEARNING ◇                  │
            ◇   KEY ON ?  ◇                    │
                │ YES                          │
      ST48      ▼                              │
      NO ──────◇ FIRST TIME ? ◇               │
       │           │ YES                       │
ST51   ▼    ST49   ▼                           │
┌──────────┐ ┌──────────────────────┐         │
│ PERFORM  │ │ INCREMENT COUNT OF A │         │
│ ERROR    │ │ IN ACCORDANCE WITH G │         │
│PROCESSING│ │ AND A IN STACK       │         │
└──────────┘ └──────────┬───────────┘         │
                        ▼                      │
      ST50  ┌────────────────────────┐        │
            │ CALCULATE FREQUENCY     │       │
            │ AGAIN                   │       │
            └──────────┬─────────────┘        │
                       ▼◄─────────────────────┘
              ┌──────────────┐
              │     END      │
              └──────────────┘
```

# F I G.7

European
Patent Office

**EUROPEAN SEARCH
REPORT**

Application Number

**EP 90 12 0283**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 851 985   (DAVID N. BURROR ET AL.) <br> * the whole document * <br> — — — | 1-8 | G 05 <br> B 19/04 |
| A | EP-A-0 292 914   (OMRON TATEISI ELECTRONICS CO.) <br> * page 6, line 13 - page 10, line 26 * * figures 1-8 * <br> — — — — — | 1-8 | |

TECHNICAL FIELDS
SEARCHED (Int. Cl.5)

G 05 B

The present search report has been drawn up for all claims

| Place of search | Date of completion of search | Examiner |
|---|---|---|
| The Hague | 08 February 91 | NETTESHEIM J.F. |